# FASCICULE DE BREVET EUROPEEN

(11) **EP 2 746 119 B1**
(45) Date de publication et mention de la délivrance du brevet: **23.03.2016**
(21) Numéro de dépôt: 13197216.8
(22) Date de dépôt: 13.12.2013
(51) Int. Cl.: B60T 7/04, B60T 8/17, B60T 8/172, B60T 8/32, B64C 25/42, B60T 17/22, B64C 25/44, B64C 25/46

(54) **Procédé de gestion de freinage d'un aéronef**
Bremssteuerungsverfahren eines Luftfahrzeugs
Method for managing the braking of an aircraft

(30) Priorité: 21.12.2012 FR 1262714
(43) Date de publication de la demande: 25.06.2014
(73) Titulaire: Messier-Bugatti-Dowty, 78140 Vélizy-Villacoublay (FR)
(72) Inventeur: Vaney, Jean-Baptiste, 78140 Vélizy-Villacoublay (FR); Frank, David, 78140 Vélizy-Villacoublay (FR); Lemay, David, 78140 Vélizy-Villacoublay (FR)
(74) Mandataire: Parzy, Benjamin Alain

(56) Documents cités:
- EP-A1- 0 329 373
- EP-A1- 0 498 714
- EP-A1- 0 610 115
- EP-A1- 1 588 912
- EP-A2- 0 443 213
- WO-A1-94/20344
- WO-A1-96/08396
- WO-A1-2010/088396
- FR-A1- 2 898 333
- US-A1- 2006 186 267
- US-A1- 2011 226 569

## Description

L'invention concerne un procédé de gestion du freinage à basse vitesse d'un aéronef permettant d'améliorer le confort des passagers et de limiter l'usure des freins.

### ARRIERE PLAN DE L'INVENTION

La gestion du freinage d'un aéronef lors du roulage au sol à basse vitesse, c'est-à-dire en dehors des phases de décollage et d'atterrissage, doit prendre en compte certaines contraintes, parmi lesquelles le confort des passagers.

Pour améliorer le confort des passagers, on cherche à mettre en oeuvre un freinage qui soit à la fois progressif et précis. Un freinage progressif permet d'éviter que les passagers ne ressentent de trop brusques décélérations. Un freinage précis à basse vitesse est important pour le confort, car il permet d'éviter que le pilote ne soit tenté d'intervenir de manière répétée sur les pédales, par exemple lorsqu'il manoeuvre l'aéronef en suivant les consigne d'un agent de piste et qu'il est confronté à une poussée moteur résiduelle. L'état de la technique est notamment illustré par le document EP0498714 A1 ou par le document FR2701006, qui décrit un procédé de pilotage d'un dispositif de freinage électro-hydraulique d'un train de roues d'aéronef. Le procédé consiste, lorsque l'aéronef roule à faible vitesse, à organiser séparément le freinage pour les roues d'un premier et d'un deuxième groupe de roues freinées distinctes, avec une loi de variation de la pression commandée en fonction de l'enfoncement des pédales de frein qui est propre à chaque groupe de roues. Une première loi intervient sur toute la plage active d'enfoncement des pédales de frein, tandis qu'une seconde loi n'intervient qu'à partir d'un certain seuil d'enfoncement prédéterminé desdites pédales. On commande donc un nombre de freins croissant en fonction du niveau de freinage commandé, ce qui permet d'assurer un freinage progressif, précis, et donc confortable.

Ce procédé présente un certain nombre d'inconvénients. Dans le cas où un frein est indisponible, par exemple lorsque l'un des équipements impliqués dans la commande de ce frein est défaillant, l'efficacité de freinage résultant des freins restants est très nettement diminuée. De plus, dans le cas où un ou plusieurs freins présentent une température ou une usure supérieure à celle des autres freins, le procédé ne permet pas de diminuer cette différence de température ou d'usure.

### OBJET DE L'INVENTION

L'invention a pour objet un procédé semblable à celui décrit plus tôt, mais ne présentant pas les inconvénients précités.

### RESUME DE L'INVENTION

En vue de la réalisation de ce but, on propose un procédé de gestion du freinage d'un aéronef comportant une pluralité de roues équipées chacune d'un frein adapté à générer un effort de freinage en réponse à un enfoncement de pédales de frein, le procédé de gestion comprenant les étapes de :
- répartir les roues équipées d'un frein en au moins deux groupes distincts ;
- affecter à chaque groupe de roues des lois respectives de variation de l'effort de freinage en fonction de l'enfoncement des pédales de frein.

Selon l'invention, le procédé comporte en outre l'étape de modifier la répartition des roues en réponse à la survenue d'un événement prédéterminé.

Ainsi, dans le cas où le frein d'une roue est indisponible, on peut répartir les autres roues de son groupe dans les autres groupes, de manière à conserver une efficacité de freinage satisfaisante. La modification de répartition permet aussi de limiter la sollicitation d'un frein d'une roue, ce qui est intéressant lorsque le frein est indisponible ou bien lorsqu'il présente une température ou une usure élevée par rapport à celle d'autres freins. Dans ce cas, on attribue cette roue à un groupe auquel on affecte une loi qui sollicite le frein le moins possible.

### BREVE DESCRIPTION DES DESSINS

L'invention sera mieux comprise à la lumière de la description qui suit en référence aux figures des dessins annexés parmi lesquelles :
- la figure 1 est une vue schématique des roues de deux atterrisseurs principaux d'un aéronef dans lequel est mis en oeuvre le procédé de gestion du freinage de l'invention ;
- la figure 2 illustre trois lois différentes de variation de pression commandée en fonction de l'enfoncement des pédales de frein, les lois étant affectées à des groupes de roues dans lesquels sont réparties les roues de l'aéronef.

### DESCRIPTION DETAILLEE DE L'INVENTION

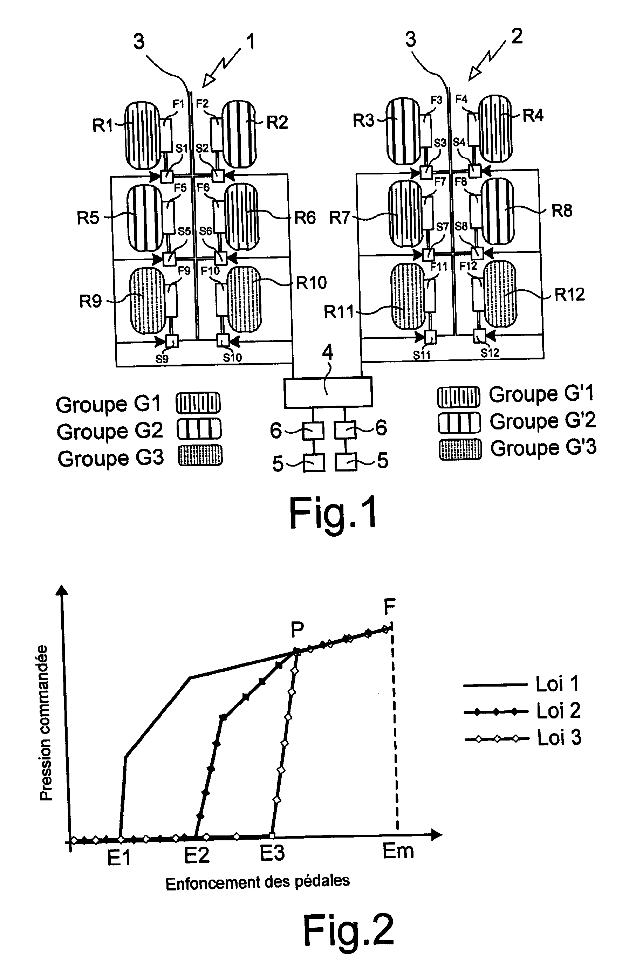

En référence à la figure 1, le procédé de gestion du freinage de l'invention est ici mis en oeuvre dans un aéronef comportant un train de douze roues portées par deux atterrisseurs principaux 1, 2. Les roues du premier atterrisseur principal 1 sont référencées R1, R2, R5, R6, R9, R10 et celles du deuxième atterrisseur principal 2 sont référencées R3, R4, R7, R8, R11, R12.

Chaque roue R1, ..., R12 est équipée d'un frein F1,..., F12 électro-hydraulique qui est actionné par une servovalve hydraulique associée S1, ..., S12. Chaque servovalve est alimentée en fluide par un circuit hydraulique 3 et est commandée électriquement par des moyens de commande 4. La commande des servovalves est effectuée en fonction de l'enfoncement de pédales 5 de freins (ici au nombre de deux). Pour cela, les pédales 5 de freins sont chacune associées à un capteur d'enfoncement 6, qui transforme l'angle d'inclinaison de la pédale 5, c'est-à-dire le niveau d'enfoncement de celle-ci, en un signal électrique représentatif de cet enfoncement. Les moyens de commande 4, qui sont connectés électriquement aux capteurs d'enfoncement 6, sont adaptés à interpréter les signaux électriques fournis par les capteurs d'enfoncement 6, et à commander les servovalves S1, ..., S12 en fonction des angles d'inclinaison des pédales. Ainsi, la pression commandée et donc l'effort de freinage généré par les freins sont fonction de l'enfoncement des pédales de frein.

Lorsque l'aéronef roule à basse vitesse, c'est à dire en dessous d'un seuil de vitesse prédéterminé (par exemple 70 ou 80 km/h), les moyens de commande 4 activent le procédé de gestion du freinage de l'aéronef, qui comprend les étapes de :
- répartir les roues des atterrisseurs 1, 2 en trois groupes distincts pour chaque atterrisseur 1, 2, les groupes étant référencés ici G1, G2, G3 pour le premier atterrisseur 1, et G'1, G'2, G'3 pour le deuxième atterrisseur 2,
- affecter à chaque groupe de roues des lois L1, L2, L2 respectives de variation de l'effort de freinage en fonction de l'enfoncement des pédales de frein.

Ainsi, à un moment d'initialisation M0, qui correspond par exemple à une mise sous tension des moyens de commande 4 lors de laquelle les freins des roues sont dans un état nominal, c'est-à-dire lorsque les freins sont fonctionnels et présentent des températures et usures relativement proches, les roues de chaque atterrisseur sont réparties dans les groupes selon la répartition suivante :
- le groupe G1 du premier atterrisseur contient les roues R1, R6, le groupe G2 les roues R2, R5, le groupe G3 les roues R9, R10 ;
- le groupe G1' du deuxième atterrisseur contient les roues R3, R8, le groupe G2' les roues R4, R7, le groupe G3' les roues R11, R12.

Au moment M0, la loi L1 est affectée aux groupes G1, G1', la loi L2 au groupes G2, G2', la loi L3 aux groupes G3, G3'.

On note que pour homogénéiser le freinage, il est intéressant d'affecter les roues centrales R5, R6, et R7, R8 des atterrisseurs 1, 2 à des groupes distincts. En effet, les roues centrales sont souvent moins chargées que les roues avant et arrière, et donc sont susceptible de déraper à des niveaux d'effort de freinage commandés plus bas.

On note aussi que les groupes définissent une répartition symétrique au regard d'un plan longitudinal médian de l'aéronef et au regard d'un axe de chaque atterrisseur (chaque groupe de roue produit une traînée symétrique par rapport à ce plan et à cet axe), ce qui est favorable au maintien d'une bonne dirigeabilité et à une réduction des efforts de torsion appliqués aux atterrisseurs.

On note enfin que, bien que semblables, les lois L1 L2, L3, sont appliquées aux groupes G1, G2, G3 et G'1, G'2, G'3 des deux atterrisseurs 1, 2 de manière indépendante. On s'attachera donc uniquement, dans la suite de cette description, à la mise en oeuvre du procédé de gestion du freinage de l'invention sur les roues R1, R2, R5, R6, R9, R10 du premier atterrisseur 1 et aux groupes G1, G2, G3 auxquels elles sont affectées, l'ensemble de ce qui suit pouvant être appliqué de manière identique aux roues du deuxième atterrisseur 2 et aux groupes G'1, G'2, G'3 auxquels elles sont affectées.

Les lois L1, L2, L3, visibles à la figure 2, sont des fonctions F1, F2, F3 continûment croissantes, qui définissent des pressions commandées, et donc des efforts de freinage à partir de seuils minimums distincts E1, E2, E3 d'enfoncement des pédales, E1 étant inférieur à E2 qui est lui-même inférieur à E3. Un effort de freinage est donc généré à partir du moment où les pédales de freins sont enfoncées d'un enfoncement supérieur ou égal au seuil de la loi affectée. Le seuil E1 est relativement faible mais non nul, par exemple de l'ordre de 15%. La fonction F1 demeure supérieure à la fonction F2 qui elle-même demeure supérieure à la fonction F3 jusqu'à ce que les trois fonctions se rejoignent en un point P, à partir duquel les fonctions demeurent égales jusqu'à un point F correspondant à un enfoncement Em maximal des pédales.

L'utilisation, pour réaliser un freinage à basse vitesse, d'un nombre de freins croissant en fonction de l'enfoncement des pédales (quatre jusqu'à E2, puis huit jusqu'à E3, et douze ensuite) permet d'assurer un freinage progressif, précis, et donc confortable. Les freins commandés selon les lois L1 et L2, soit quatre freins sur six, doivent générer un effort de freinage égal à l'effort qui serait normalement généré par six freins. Ainsi, chacun de ces freins génère un effort de freinage relativement important lorsqu'il est utilisé.

On prévoit d'alterner automatiquement l'affectation des lois aux groupes à chaque interruption de freinage, c'est-à-dire chaque fois que les pédales sont relâchées à partir d'un enfoncement inférieur à une valeur basse prédéterminée, de manière à ce que chaque groupe de freins soit commandé successivement selon une loi différente. Ceci permet d'homogénéiser l'usure et la température des freins.

Le procédé de gestion de l'invention comporte en outre l'étape de modifier la répartition des roues en réponse à la détection, sur une ou plusieurs roues dites roues singulières :
- de l'indisponibilité du frein ;
- d'une température élevée du frein par rapport aux températures d'autres freins ;
- d'une usure élevée du frein par rapport aux usures d'autres freins.

En cas d'indisponibilité d'un frein d'une roue singulière d'un certain groupe, due par exemple à un dysfonctionnement de la servovalve associée au frein ou d'un problème dans le circuit hydraulique, on place l'autre roue du même groupe dans l'un des autres groupes restants, et on affecte les lois L1 et L2 aux groupes restants. La loi L3 n'est alors plus utilisée. Par exemple, lorsque survient une indisponibilité du frein F6 de la roue R6, on place la roue R1 dans le groupe G2, et on affecte la loi L1 au groupe G2 et la loi L2 au groupe G3. On alterne ensuite automatiquement l'affectation des lois L1, L2 aux groupes G2 et G3 à chaque interruption de freinage.

Le freinage est alors un peu moins précis et progressif que lorsque tous les freins étaient disponibles, mais tout aussi efficace pour des enfoncements de pédales inférieurs à E2. Le freinage est un peu moins efficace pour des enfoncements de pédales supérieurs à E2, car cinq freins sur six fonctionnent alors que les six freins fonctionnaient dans cette zone d'enfoncement avant la survenue de l'indisponibilité du frein F6.

En cas d'indisponibilité de deux freins de deux roues singulières de groupes différents, on modifie la répartition des roues en plaçant les deux roues singulières dont les freins sont indisponibles dans un même groupe auquel on affecte la loi L3, et en plaçant les roues restantes dans deux groupes auxquels on affecte les lois L1 et L2. Par exemple, lorsque survient une indisponibilité des freins F1, F10 des roues R1 et R10, on conserve le groupe G2, on forme le groupe G1 avec les roues R6 et R9 et le groupe G3 avec les roues R1 et R10. On alterne ensuite l'affectation des lois L1 et L2 entre les groupes G1 et G2, et on utilise toujours la loi L3 pour le groupe G3. Le freinage est donc aussi efficace pour des enfoncements de pédales inférieurs à E2, et l'effort de freinage résultant est égal aux deux-tiers de l'effort de freinage nominal pour des enfoncements supérieurs à E2.

Dans le cas où l'on détecte que les freins de deux roues singulières ont une température ou une usure élevée par rapport à celles d'autres freins, on répartit et on affecte les lois aux roues de la même manière que dans le cas précédent. Lorsque les freins des roues R1 et R10 ont une température ou une usure trop importante, on forme le groupe G1 avec les roues R6 et R9, le groupe G2 avec les roues R2 et R5, et le groupe G3 avec les roues R1 et R10. On alterne ensuite l'affectation des lois L1 et L2 entre les groupes G1 et G2, et on utilise toujours la loi L3 pour le groupe G3. Ainsi, comme les freins des roues du groupe G3 sont moins utilisés que les autres (ils ne sont sollicités que pour des enfoncements supérieurs à E2), la différence de température ou d'usure entre ces freins et les autres freins va s'amenuiser.

L'invention n'est pas limitée au mode de réalisation particulier qui vient d'être décrit, mais, bien au contraire, couvre toute variante entrant dans le cadre de l'invention tel que défini par les revendications.

Bien que l'on ait illustré l'invention en utilisant des roues munies de freins électro-hydrauliques, il est bien sûr possible d'appliquer l'invention à des freins électromécaniques. Les lois L1, L2 et L3 utilisées seront alors bien sûr adaptées, mais elles définissent toujours des variations d'effort de freinage continument croissantes en réponse à un enfoncement de pédales de frein, et des seuils minimums différents d'enfoncement des pédales de frein à partir desquels un effort de freinage est généré.

Bien que l'on ait utilisé un train de roues comprenant douze roues montées sur deux atterrisseurs principaux et réparties en trois groupes, le procédé de gestion du freinage de l'invention peut être mis en oeuvre sur un aéronef comportant un nombre de roues différent réparties dans un nombre de groupes différent.

Bien que l'on ait proposé une certaine répartition initiale de roues en groupes, cette répartition initiale aurait bien sûr pu être différente. Pour le premier atterrisseur, un premier groupe aurait ainsi pu être composé des roues R1, R5, R9, et un deuxième groupe des roues R2, R6, R10. On aurait aussi pu former des groupes avec des roues d'atterrisseurs différents. Un premier groupe aurait ainsi pu être composé des roues R1, R2, R7, R8, et un deuxième groupe des roues R3, R4, R5, R6.

Les lois L1, L2, L3 ne sont fournies qu'à titre d'illustration, et peuvent bien sûr être définies différemment (le document FR2701006, notamment, présente des lois différentes).

On pourrait aussi prévoir de modifier la répartition des roues de façon différente, par exemple en attribuant à un même groupe une roue dont le frein est indisponible et une roue dont le frein a une température trop élevée.

De même, on pourrait prévoir de modifier la répartition en réponse à la survenue d'évènements différents, par exemple la détection d'une pression élevée ou d'une température élevée d'un pneumatique d'une roue par rapport aux pressions ou températures d'autres roues.

## Revendications

1. Procédé de gestion du freinage d'un aéronef comportant une pluralité de roues (R1, ..., R12) équipées chacune d'un frein (F1, ..., F12) adapté à générer un effort de freinage en réponse à un enfoncement de pédales (5) de frein, le procédé de gestion comprenant les étapes de :
- répartir les roues équipées d'un frein en au moins deux groupes distincts (G1, G2, G3, G'1, G'2, G'3) ;
- affecter à chaque groupe de roues des lois (L1, L2, L3) respectives de variation de l'effort de freinage en fonction de l'enfoncement des pédales de frein ;
**caractérisé en ce que** le procédé comporte en outre l'étape de modifier la répartition des roues en réponse à la survenue d'un événement prédéterminé.

2. Procédé de gestion du freinage selon la revendication 1, dans lequel chaque loi (L1, L2, L3) définit un seuil minimum (E1, E2, E3) différent d'enfoncement des pédales de frein à partir duquel un effort de freinage est généré.

3. Procédé de gestion du freinage selon l'une des revendications précédentes, dans lequel l'étape de modification de la répartition est mise en oeuvre en réponse à la détection sur au moins une roue dite roue singulière :
- de l'indisponibilité du frein, ou
- d'une température du frein élevée par rapport aux températures d'autres freins, ou
- d'une usure du frein élevée par rapport aux usures d'autres freins, ou
- d'une température d'un pneumatique élevée par rapport aux températures d'autres pneumatiques, ou
- d'une pression du pneumatique élevée par rapport aux pressions d'autres pneumatiques.

4. Procédé de gestion du freinage selon la revendication 3, dans lequel une roue d'un groupe comportant une roue singulière dont le frein est indisponible est affectée à l'un des autres groupes.

5. Procédé de gestion du freinage selon les revendications 2 et 3, dans lequel la roue singulière est attribuée à un groupe auquel est affectée la loi qui définit le seuil minimum d'enfoncement le plus élevé.

## Patentansprüche

1. Verfahren zum Steuern der Bremsung eines Luftfahrzeugs, das eine Vielzahl von Rädern (R1, ..., R12) umfasst, die jeweils mit einer Bremse (F1, ..., F12) ausgestattet sind, die dazu geeignet ist, eine Bremskraft in Antwort auf ein Drücken von Bremspedalen (5) zu erzeugen, wobei das Steuerverfahren die Schritte umfasst:
- Einteilen der mit einer Bremse ausgestatteten Räder in mindestens zwei verschiedene Gruppen (G1, G2, G3, G'1, G'2, G'3);
- Zuweisen zu jeder Gruppe von Rädern von jeweiligen Gesetzen (L1, L2, L3) zur Veränderung der Bremskraft in Abhängigkeit des Drückens der Bremspedale;
**dadurch gekennzeichnet, dass** das Verfahren ferner den Schritt des Änderns der Einteilung der Räder in Antwort auf das Auftreten eines vorbestimmten Ereignisses umfasst.

2. Verfahren zum Steuern der Bremsung nach Anspruch 1, wobei jedes Gesetz (L1, L2, L3) einen unterschiedlichen Mindestschwellwert (E1, E2, E3) des Drückens der Bremspedale definiert, ab dem eine Bremskraft erzeugt wird.

3. Verfahren zum Steuern der Bremsung nach einem der vorhergehenden Ansprüche, wobei der Schritt des Änderns der Einteilung in Antwort darauf erfolgt, dass an mindestens einem als singuläres Rad bezeichneten Rad, erfasst wird:
- die Nichtverfügbarkeit der Bremse, oder
- eine im Vergleich zu den Temperaturen der anderen Bremsen erhöhte Temperatur der Bremse, oder
- eine im Vergleich zu den Abnutzungen der anderen Bremsen erhöhte Abnutzung der Bremse, oder
- eine im Vergleich zu den Temperaturen der anderen Reifen erhöhte Temperatur eines Reifens, oder
- einen im Vergleich zu den Drücken der anderen Reifen erhöhten Druck des Reifens.

4. Verfahren zum Steuern der Bremse nach Anspruch 3, wobei ein Rad einer Gruppe, die ein singuläres Rad umfasst, dessen Bremse nicht verfügbar ist, einer der anderen Gruppen zugeordnet wird.

5. Verfahren zum Steuern der Bremse nach den Ansprüchen 2 und 3, wobei das singuläre Rad einer Gruppe zugeordnet wird, der das Gesetz zugewiesen ist, das den höchsten Mindestschwellwert des Drückens definiert.

## Claims

1. A method of managing the braking of an aircraft, the aircraft having a plurality of wheels (R1, ..., R12), each fitted with a brake (F1, ..., F12) adapted to generate a braking force in response to brake pedals (5) being depressed, the management method comprising the steps of:
• distributing the wheels fitted with respective brakes in at least two distinct groups (G1, G2, G3, G'1, G'2, G'3); and
• allocating respective relationships (L1, L2, L3) to each of the groups of wheels for determining how braking force varies as a function of the depression of the brake pedals;
the method being **characterized in that** it further comprises the step of modifying the distribution of the wheels in response to a predetermined event occurring.

2. A braking management method according to claim 1, wherein each relationship (L1, L2, L3) defines a different minimum threshold (E1, E2, E3) for brake pedal depression from which a braking force is applied.

3. A braking management method according to any preceding claim, wherein the step of modifying the distribution is performed in response to detecting, on at least one wheel referred to as a "singular" wheel:
• unavailability of the brake; or
• the brake having a temperature that is high compared with the temperatures of the other brakes; or
• the brake having a high degree of wear compared with the wear of the other brakes; or
• a tire having a temperature that is high compared with the temperatures of other tires; or
• a tire having a pressure that is high compared with the pressures of other tires.

4. A braking management method according to claim 3, wherein a wheel of a group including a singular wheel having its brake unavailable is allocated to one of the other groups.

5. A braking management method according to claims 2 and 3, wherein the singular wheel is allocated to a group that has allocated thereto the relationship defining the highest minimum threshold for brake pedal depression.
